# EUROPEAN PATENT SPECIFICATION

(11) **EP 1 469 423 B1**
(45) Date of publication and mention of the grant of the patent: **04.06.2008**
(21) Application number: 03701876.9
(22) Date of filing: 27.01.2003
(51) Int. Cl.: G06T 17/40, G05B 13/04, G08G 1/16, G05D 1/02

(54) **AUTOMATIC WORKING SYSTEM**
AUTOMATISCHES ARBEITSSYSTEM
SYSTEME DE TRAVAIL AUTOMATIQUE

(30) Priority: 25.01.2002 JP 2002017779
(43) Date of publication of application: 20.10.2004
(73) Proprietor: Iwane Laboratories, Ltd., Sapporo-shi, Hokkaido 064-0944 (JP)
(72) Inventor: IWANE, Waro, c/o IWANE LABORATORIES, LTD., Sapporo-shi, Hokkaido 064-0944 (JP)
(74) Representative: Liebetanz, Michael
(86) International application number: PCT/JP2003/000720
(87) International publication number: WO 2003/063087

(56) References cited:
- EP-A- 0 390 583
- DE-A1- 19 603 267
- JP-A- 6 161 558
- JP-A- 6 274 094
- JP-A- 9 212 219
- JP-A- 2000 172 878
- US-A- 5 850 352
- ASTEASU C ET AL: "THREE-DIMENSIONAL WORLD MODEL BUILDING AND IMAGING SYSTEM BASED ON A PRIORI KNOWLEDGE" COMPUTERS IN INDUSTRY, ELSEVIER SCIENCE PUBLISHERS. AMSTERDAM, NL, vol. 24, no. 1, 1 May 1994 (1994-05-01), pages 39-54, XP000454381 ISSN: 0166-3615

## Description

### Technical Field

The present invention relates to an intelligent operation system which can be applied to an automatic operating system of, e.g., an operating machine such as an automobile, a transport machine such as an aircraft, a transporter crane, a robot and others, an intelligent operation system which play games with human beings or uses sign languages and the like, an automatic monitoring system which performs monitoring or observation on behalf of human beings, and others.

### Background Art

Realization of an automatic operating system of, e.g., an operating machine such as an automobile, a transport machine such as an aircraft, a transporter crane, a robot and others, an intelligent operation system which play games with human beings or uses sign languages and the like, an automatic monitoring system which performs monitoring or observation on behalf of human beings has been demanded and expected for a long time. However, there is no machine or apparatus which is completely automated to the extent requiring almost no support from human beings even now.

In the circumstances, many studies or examinations of the automatic operating system of automobiles have been made up to now although it is far from complete automation, and various kinds of methods have been proposed and released.

For example, there are well known a method which embeds magnets or an electric cable for signal transmission along a traveling path of a road and causes an automobile to run along the magnet or the electric cable, or a method which measures a distance from a preceding car by a simplified radar and causes a car to travel while maintaining a distance between the two cars constant, and these methods have come into practical use. Further, there has been recently proposed a method which recognizes a painted lane marking line provided on a road and moves a car while maintaining a distance from that line constant.

However, the above-described conventional methods concerning automatic driving of cars is a method which detects any marking on a predetermined traveling path and causes a car to travel in a predetermined position with a predetermined distance between two cars. Like an invisible rail being provided, there is no great difference from a method that a train or the like actually moves on a rail, and these methods are completely different from the case that a human drives a car.

Furthermore, even though the car itself measures a distance from a preceding car just like when a human drives a car, but it does not comprehend a measurement target is a car nor comprehend a content indicated in a road sign by reading it. Still more, the car does not comprehend a speed limit indicated on a road sign in order to decide to keep within the speed limit.

That is, in the conventional methods, as different from the case that a human actually drives a car, the car itself never judge a traffic situation in a surrounding area in order to determine a distance between the two cars, or never comprehend a content of a road sign by reading and keep it, or never judge a degree of danger and apply a brake.

US 5,850,352 discloses a system to provide a synthesis of a plurality of images which are captured by a plurality of cameras in a viewpoint of a observer or viewer. This means that a real world scene is captured by means of the cameras of different spatial perspectives. A full three-dimensional model of the real world scene is being created. A video representation of the scene that is in accordance with the desired perspective can be produced.

In view of the above-described problems in the prior art, it is an object of the present invention to provide an intelligent operation system by which a transport machine itself such as an automobile or an aircraft and an operating machine itself such as a transporter crane or a robot can comprehend and judge various situations like a human does when driving a car, and they can operate a car based on such comprehension and judgment, and which can realize a substantially complete automatic operating system.

Moreover, it is another object of the present invention to provide an intelligent operation system that an apparatus which keeps occupied by a human or substitutes for a human can comprehend and judge various situations like a human does when actually performing games or monitoring, and can recognize a process and a result based on such comprehension and judgment, and that an intelligent operation system which plays games or uses a sign language with a human, an automatic monitoring system which effects monitoring or observation on behalf of a human, and others can be realized.

### Disclosure of the Invention

As described above, in order to allow a machine or an apparatus to perform complicated and sophisticated works, i.e., temporarily projecting a physical world into the cerebrum, reading, understanding and judging various kinds of information on the whole, and then operating a car like a human does when driving a car, as a basic technique, therefore, there is required a technique by which the actual physical environment is projected into the three-dimensional space in the world of the virtual reality by a computer, some objects required for a target work are fetched into the automatically modeled virtual three-dimensional space in real time, and a plurality of the objects in the physical world are associated with a plurality of the models in the virtual three-dimensional space in real time.

Japanese patent application laid-open No. 190725/2000 discloses the above-described basic technique as an information conversion system which realizes a parts reconstruction method (PRM).

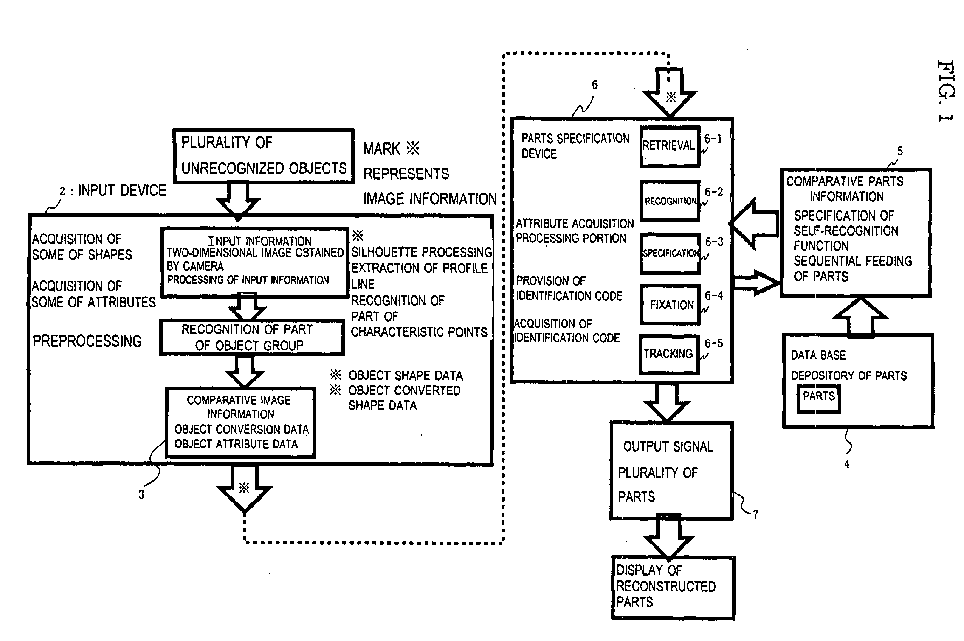

As shown in FIG. 1, this information conversion system 1 is constituted by an input device 2, a comparative image information generation device 3, a parts data base 4, a comparative parts information generation device 5, a parts specification device 6, and an output device 7.

The input device 2 acquires information concerning an object in the physical world, and a video camera or the like can be adopted.

Based on the video camera, a situation in a predetermined range in which a plurality of objects exist can be acquired as a two-dimensional image. In addition, when a plurality of video cameras are used, the object can be obtained as a pseudo-three-dimensional image with a parallax by shooting the object from different directions.

The comparative image information generation device 3 processes an image of the object acquired by the input device 2 and generates comparative image information.

As the comparative image information, there may be a two-dimensional image, a three-dimensional image, an image obtained by extracting only a profile line from the two-dimensional image, an image obtained by extracting only a peripheral surface, integrating conversion data and others.

The parts data base 4 registers and stores therein a plurality of parts obtained by modeling the object.

Attribute data such as a name, a property, a color and others as well as a three-dimensional shape of the object is given to each part, and the attribute data is associated with an identification code of each part and registered in the parts data base 4.

The comparative parts information generation device 5 generates comparative parts information based on the attribute data in accordance with each part registered in the parts data base 4.

As the comparative parts information, there may be a two-dimensional image obtained by projecting a part having three-dimensional shape data in each direction, integrating conversion data and others.

The parts specification device 6 compares the comparative image information and the comparative parts information having the same type of data with each other and specifies a part corresponding to the object. It is constituted by a retrieval processing portion 6-1, a recognition processing portion 6-2, a specification processing portion 6-3, a fixation processing portion 6-4, and a tracking processing portion 6-5.

The retrieval processing portion 6-1 sequentially extracts the comparative parts information and searches for a part in the comparative image information which corresponds to the comparative parts information. When there is a part in the comparative image information which corresponds to the comparative parts information, the recognition processing portion 6-2 recognizes it as the object. Additionally, the specification processing portion 6-3 specifies the part having the comparative parts information as the part corresponding to the object.

The fixation processing portion 6-4 determines a position of the specified part based on a position of the recognized object, and further determines an arrangement direction of that part based on the comparative parts information corresponding to the object. When the position of the same object continuously varies, the tracking processing portion 6-5 tracks the object while repeatedly updating the position of the part by using the fixation processing portion 6-4.

The output device 7 outputs the identification code and the attribute data of the specified part, and reconstructs and displays a plurality of parts and the spatial arrangement of these parts as an image viewed from an arbitrary position.

Executing the PRM by using the information conversion system 1 can convert the object in the physical world into the part having various kinds of attribute data given thereto in the virtual three-dimensional space, thereby realizing the sophisticated image recognition or image understanding.

According to the present invention, in order to provide the intelligent operation system which can execute works like those done by humans, the PRM is applied as a fundamental technique, and there is constituted an intelligent operation system comprising: an input device which acquires information concerning a plurality of objects in a physical world; a virtual model data base which registers and stores therein a plurality of virtual models in a virtual space corresponding to the objects; a virtual model conversion device which recognizes information concerning a plurality of the objects acquired by the input device, selects and specifies virtual models corresponding to a plurality of the objects from the virtual model data base and substitutes a plurality of the corresponding virtual models for a plurality of the objects; a virtual model reconstruction device which reconstructs a plurality of the objects and a relationship between a plurality of the objects into a plurality of the corresponding virtual models and a relationship between these virtual models in the virtual space; a virtual model processing device which performs calculation and processing based on a plurality of the virtual models and the relationship between these virtual models in the virtual space reconstructed by the virtual model reconstruction device, and comprehends and judges a plurality of the virtual models and the relationship between these virtual models; and a control device which automatically operates a predetermined object in the physical world based on comprehension and judgment made by the virtual model processing device.

It is possible to constitute an intelligent operation system having as a constituent element a display device which automatically displays a process and a result in the physical world based on comprehension and judgment made by the virtual model processing device in place of the control device.

The virtual model processing device can be constituted by: an object attribute data model conversion device which selects and extracts attribute data which matches with a work object from attribute data concerning a plurality of the reconstructed virtual models, and converts it into an object attribute data model; a semantic data model conversion device which generates semantic data concerning the work object from a relationship of the extracted object attribute data model, and converts it into a semantic data model; a comprehensive semantic data conversion device which generates comprehensive semantic data concerning the work object from a relationship of the generated semantic data model, and converts it into a comprehensive semantic data model; and a judgment data model conversion device which generates judgment data optimum for the work object from the generated comprehensive semantic data model, converts it into a judgment data model and outputs it.

The virtual model may include a fragmentary model obtained by dividing the object into a plurality of constituent elements and modeling each of the constituent elements.

The attribute data may include a physical quantity, a sound, an odor, and others.

The virtual model conversion device may be of a type which recognizes and tracks a moving or varying object before specifying the virtual model corresponding the object, grasps a part in the virtual mode which can be readily specified and specifies the virtual model corresponding to the object while the object moves or varies with time.

In the virtual model processing device, the semantic data model conversion device may be provided on a plurality of stages.

The intelligent operation system may have a data transmission/reception device which can transmit/receive data in the intelligent operation system or between the intelligent operation systems.

### Brief Description of the Drawings

FIG. 1 is a conceptual view showing a procedure of carrying out a parts reconstruction method;
FIG. 2 is a conceptual view of an intelligent operation system according to the present invention;
FIG. 3 is a conceptual view of the intelligent operation system according to the present invention;
FIG. 4 is an explanatory view showing a processing procedure of a virtual model processing device;
FIG. 5 is an explanatory view showing a method of specifying a virtual model by tracking a moving object;
FIG. 6 is an explanatory view showing a method of specifying a virtual model corresponding to an object based on a fragmentary model;
FIG. 7 is an explanatory view showing a processing procedure in an automatic operating system of cars;
FIG. 8 is an explanatory view of the virtual model and attribute data in the automatic operating system of cars;
FIG. 9 is an explanatory view showing a correspondence relationship between the physical world and a virtual three-dimensional space;
FIG. 10 is a conceptual view showing the correspondence relationship between the physical world and the virtual three-dimensional space;
FIG. 11 is an explanatory view showing a positional relationship of vehicles in the virtual three-dimensional space;
FIG. 12 is an explanatory view showing an operation of avoiding a collision with an oncoming vehicle;
FIG. 13 is a conceptual view showing each mode of the automatic operating system;
FIG. 14 is an explanatory view showing a method of combining a still object model and a moving object model;
FIG. 15 is a schematic block diagram of a game monitoring device;
FIG. 16 is a view showing a display screen in a server device;
FIG. 17 is an explanatory view showing fragmentary models of cards; and
FIG. 18 is a view showing a display screen in a client device.

### Best Mode for Carrying out the Invention

Preferred embodiments of the intelligent operation system according to the present invention will now be described hereinafter with reference to the accompanying drawings.

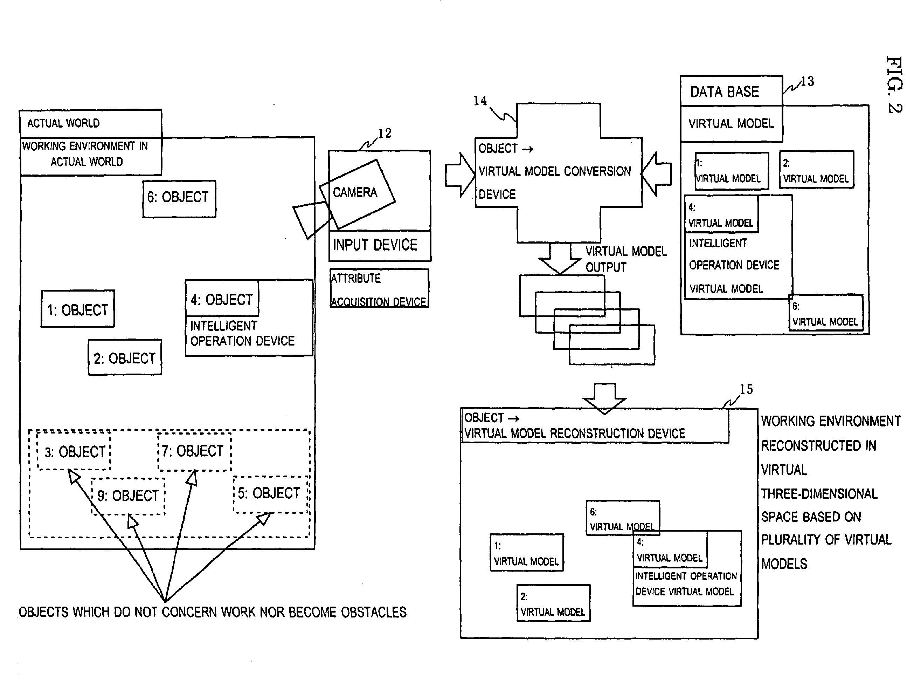

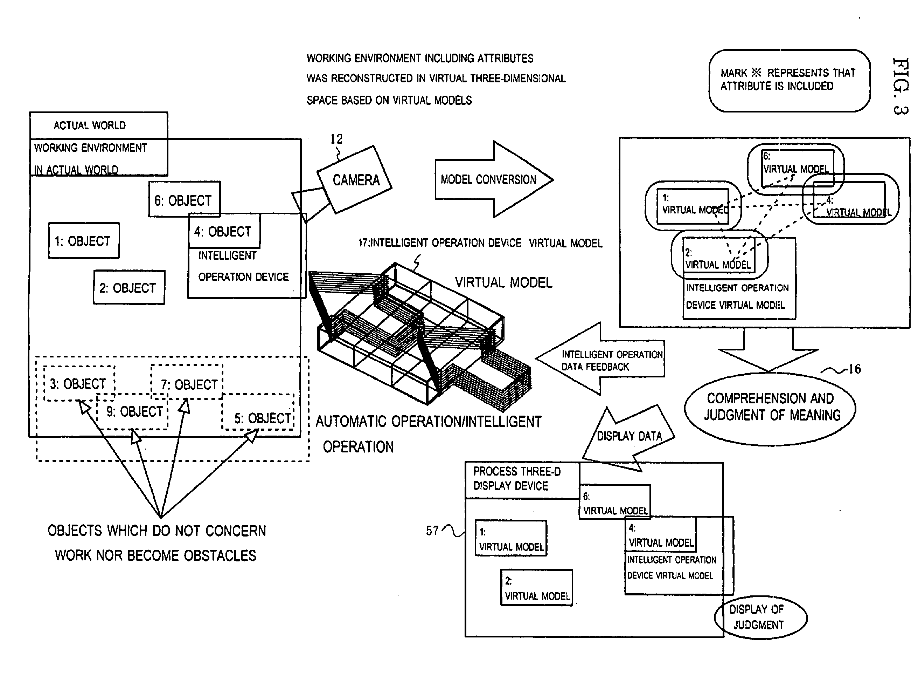

An intelligent operation system 11 according to an embodiment of the present invention is constituted by an input device 12, a virtual model data base 13, a virtual model conversion device 14, a virtual model reconstruction device 15, a virtual model processing device 16, and a control device 17 as shown in FIGS. 2 and 3.

The input device 12 acquires information concerning an object in the physical world, and a video camera or the like can be adopted.

Based on the video camera, a situation in a predetermined range in which a plurality of objects exist can be acquired as an two-dimensional image. Further, when a plurality of the video cameras are used, the object can be acquired as a pseudo-three-dimensional image with a parallax by shooting the object from different directions.

The virtual model data base 13 registers and stores therein a plurality of virtual models obtained by modeling the object.

Attribute data of, e.g., a name, a property and a color as well as a three-dimensional shape of the object is given to the virtual model, and the attribute data is associated with an identification code of each part and registered in the virtual model data base 13.

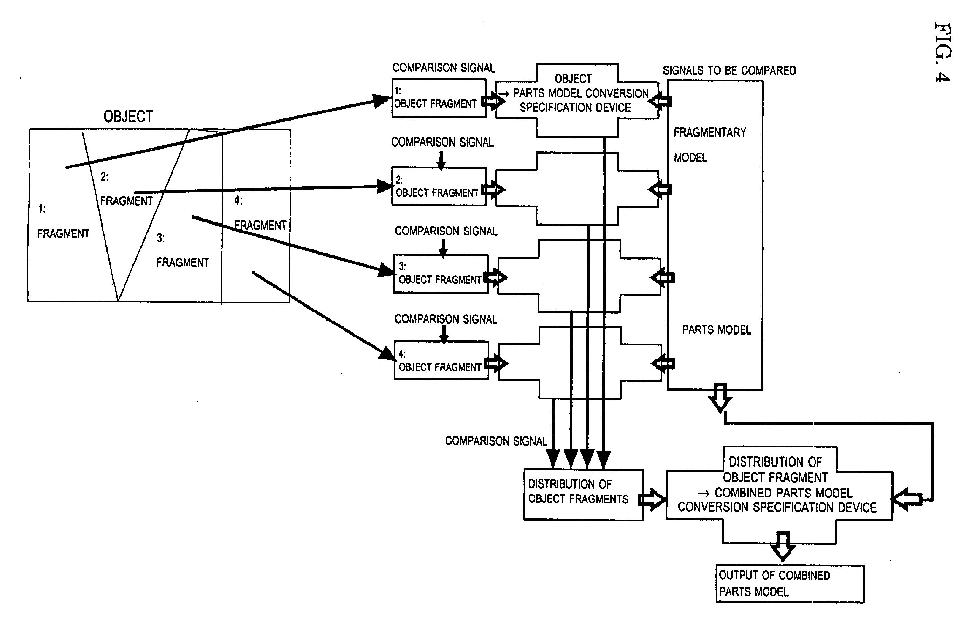

The virtual model is not restricted to one obtained by modeling the object itself, and it is possible to adopt a fragmentary model obtained by dividing the object into a plurality of constituent elements and modeling each constituent element as shown in FIG. 4.

Based on this, in case of an object whose three-dimensional shape is not determined, an object whose three-dimensional shape cannot be uniquely determined, or an object for which a virtual model with a fixed three-dimensional shape cannot be prepared, the object can be associated with a model obtained by combining the fragmentary models.

As the attribute data, it is possible to adopt a physical quantity, a sound, an odor or the like which cannot be grasped from an image of the object alone.

Based on this, an abstract object or an environment in which an object exists can be likewise modeled.

The virtual model conversion device 14 recognizes information concerning a plurality of objects acquired by the input device 12, selects and specifies virtual models corresponding to a plurality of the objects from the virtual model data base 13, and substitutes a plurality of the corresponding virtual models for a plurality of the objects.

Here, the virtual model has a three-dimensional shape as an attribute, and its three-dimensional position coordinate is fixed when the virtual model is specified. Furthermore, when an object moves, a corresponding virtual model also moves, and a position of the object is tracked.

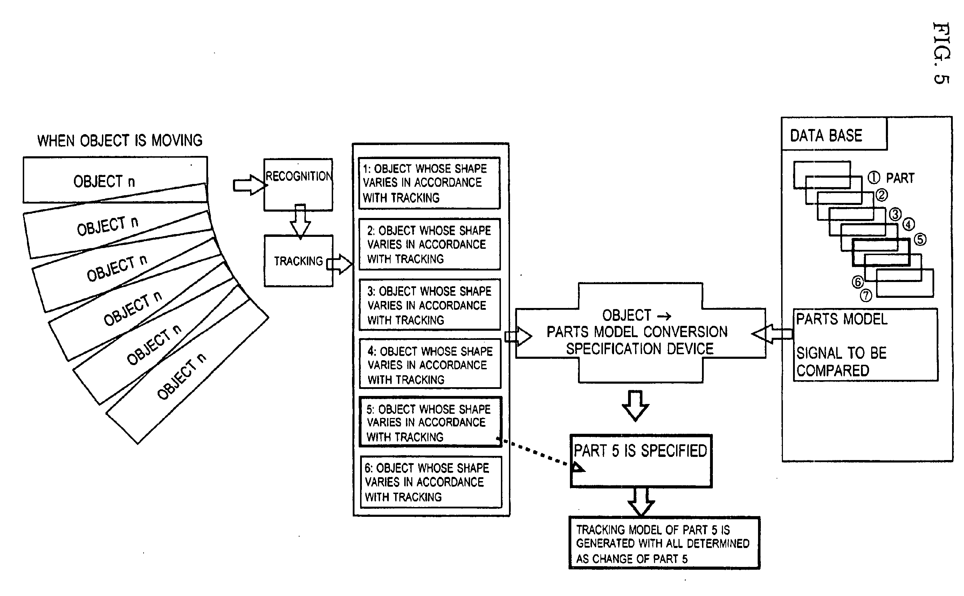

As shown in FIG. 5, the virtual model conversion device 14 may be of a type which recognizes and tracks a moving or varying object before specifying a virtual model corresponding to the object, grasps a part in the virtual model which can be readily specified and specifies the virtual model corresponding to the object while the object is moving or varying with time.

The virtual model reconstruction device 15 reconstructs a plurality of the objects and a relationship between these objects into a plurality of the corresponding virtual models and a relationship between these virtual models in the virtual space.

As a result, movement or variation of a plurality of objects existing in the actual three-dimensional space and the relationship between these objects are reconstructed as movement or variation of virtual models and the relationship between these objects in the virtual three-dimensional space.

The virtual model processing device 16 executes calculation and processing using programs and expressions based on a plurality of the virtual models and the relationship of these models reconstructed in the virtual space, performs simulation, and comprehends and judges a plurality of the virtual models and their relationship.

The control device 17 automatically operates a predetermined object in the physical world based on comprehension and judgment made by the virtual model processing device 16, and it is possible to adopt a hydraulic device or the like which actuates in response to an output command from a control circuit.

As shown in FIG. 3, an intelligent operation system 51 according to another embodiment of the present invention has a display device 57 as a constituent element in place of the control device 17 in the intelligent operation system 11.

The display device 57 automatically displays a process and a result in the physical world based on comprehension and judgment made by the virtual model processing device 16, and various kinds of display devices such as a liquid crystal display can be employed.

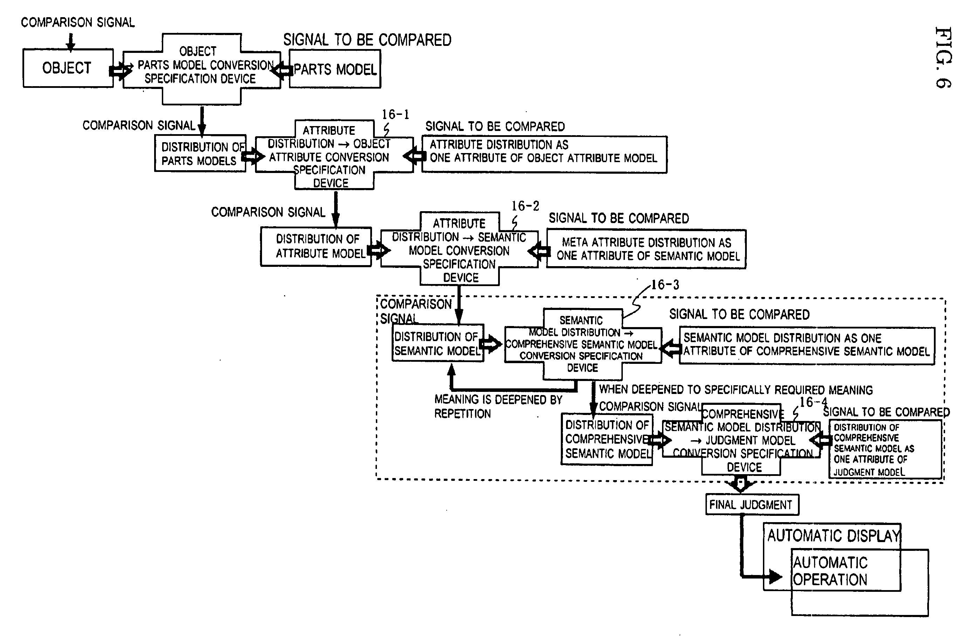

As shown in FIG. 6, in the intelligent operation system 11 or 51, the virtual model processing device 16 can be constituted by an object attribute data model conversion device 16-1, a semantic data model conversion device 16-2, a comprehensive semantic data conversion device 16-3, and a judgment data model conversion device 16-4.

The object attribute data model conversion devicel6-1 selects and extracts attribute data matched with a work object from attribute data concerning a plurality of the reconstructed virtual models, and converts it into an object attribute data model.

In this conversion processing, the attribute data matched with a work object is selected from attribute data concerning a plurality of the reconstructed virtual models, and a distribution of the selected attribute data is determined as a comparison signal. On the other hand, object attribute data models corresponding to the distribution of the attribute data are registered and stored in the data base in advance. These object attribute data models are determined as signals to be compared, and the comparison signal is compared with the signals to be compared. The model matched with the distribution of the attribute data is outputted as an object attribute data model.

The semantic data model conversion device 16-2 generates semantic data concerning a work object from the extracted object attribute data model, and converts it into a semantic data model.

In this conversion processing, object attribute data concerning the work object is selected from the extracted object attribute data, and a distribution of the object attribute data is determined as a comparison signal. On the other hand, semantic data models corresponding to the distribution of the object attribute data are registered and stored in the data base in advance, and these semantic data models are determined as signals to be compared. The comparison signal is compared with the signals to be compared, and a model matched with distribution of the object attribute data is outputted as the semantic data model.

The comprehensive semantic data conversion device 16-3 generates comprehensive semantic data concerning the work object from the relationship of the generated semantic data model, and converts it into a comprehensive semantic data model.

In this conversion processing, semantic data concerning the work object is selected from the generated semantic data, and a distribution of the semantic data is determined as a comparison signal. On the other hand, comprehensive semantic data models corresponding to the distribution of the semantic data are registered and stored in the data base in advance, and these comprehensive semantic data models are determined as signals to be compared. The comparison signal is compared with the signals to be compared, and the model matched with the distribution of the semantic data is outputted as a comprehensive semantic data model.

The judgment data model conversion device 16-4 generates judgment data optimum for the work object from the generated comprehensive semantic data, and converts it into a judgment data model and outputs it.

In this conversion processing, comprehensive semantic data optimum for the work object is selected from the generated comprehensive semantic data, and a distribution of the comprehensive semantic data is determined as a comparison signal. On the other hand, judgment data models corresponding to the distribution of the comprehensive semantic data are registered and stored in the data base in advance, and the judgment data models are determined as signals to be compared. The comparison signal is compared with the signals to be compared, and the model matched with the distribution of the comprehensive semantic data is outputted as a judgment semantic data model.

When the semantic data is complicated and exists in multiple layers, the semantic data model conversion device 16-2 may be provided on a plurality of stages in the virtual model processing device 6.

The intelligent operation system 11 or 51 may have a data transmission/reception device which can transmit/receive data in the intelligent operation system 11, 51 or between the intelligent operation systems 11, 51. [Embodiment]

Description will now be given as to a case that the intelligent operation system according to the present invention is applied to an automatic operating system that a machine itself executes work operations, i.e., comprehension and judgment of various situations and operation based on such comprehension and judgment, and a case that it is applied to an intelligent operation system that an apparatus which keeps occupied by a human executes work operations, i.e., comprehension and judgment of various situations and recognition of a process and a result based on such comprehension and judgment, with reference to the drawings.

### [Embodiment 1]

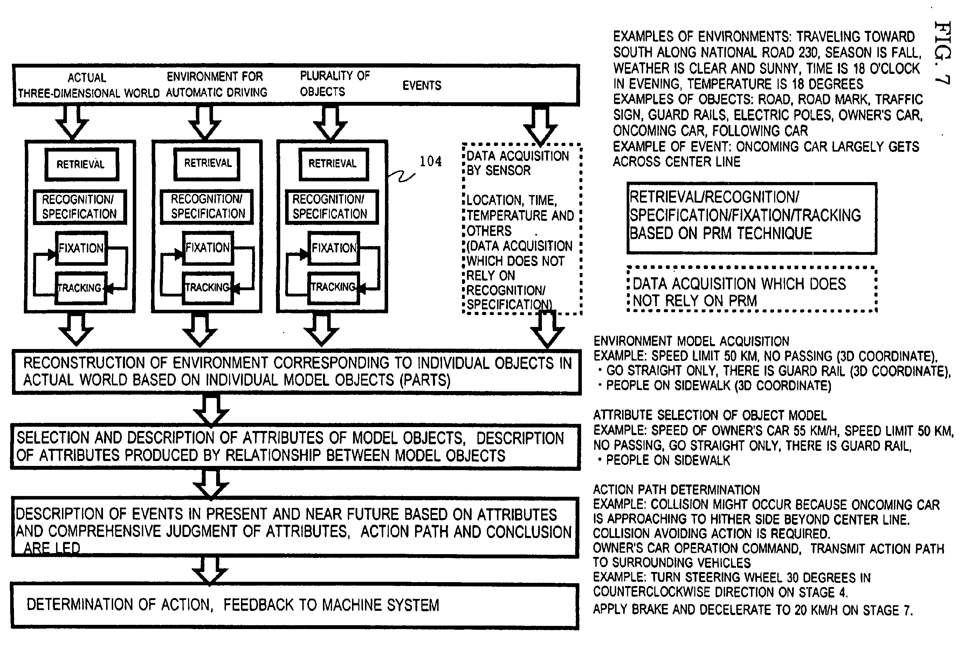

FIG. 7 is a conceptual view showing a case that the intelligent operation system according to the present invention is applied to an automatic operating system of cars.

An automatic operating system 101 of cars is also basically constituted by an input device 102, a virtual model data base 103, a virtual model conversion device 104, a virtual model reconstruction device 105, a virtual model processing device 106 and a control device 107.

A video camera or the like can be adopted as the input device 102, and using the video camera can acquire as a two-dimensional image or a pseudo-three-dimensional image a situation in a predetermined area where a plurality of objects exist in the physical world.

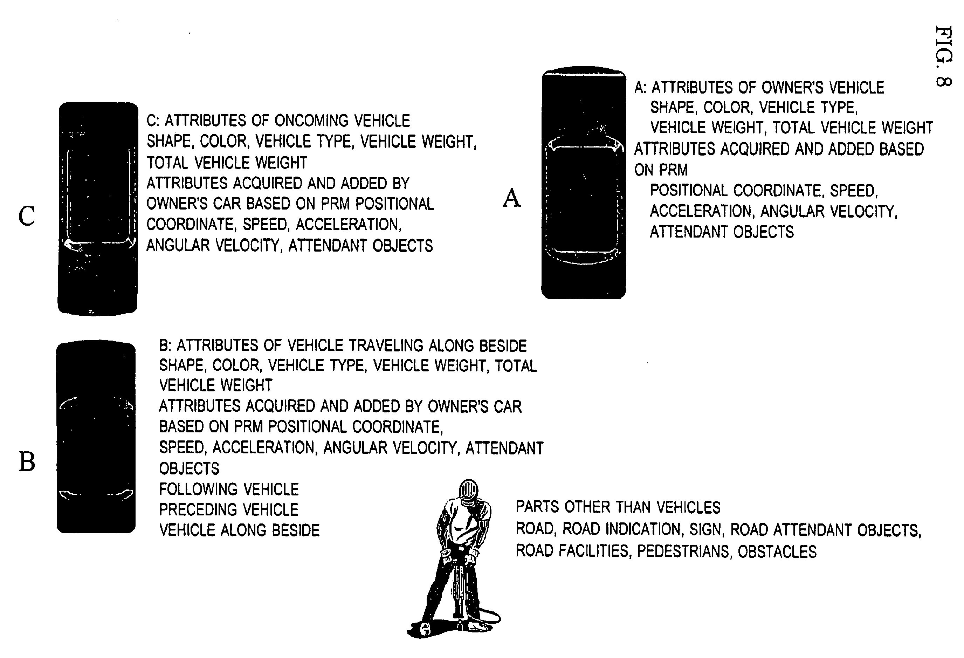

As shown in FIG. 8, models corresponding to objects such as a road, a road attendant object, a vehicle or the like are assumed as virtual models, and vehicle models are classified into an owner's vehicle, a leading vehicle, an oncoming vehicle, a vehicle running along beside, a following vehicle, and others in advance. Furthermore, a shape, a color, a vehicle type, a vehicle weight and others are assumed as attribute data concerning the vehicle model.

The virtual model conversion device 104 recognizes information concerning objects such as a road, a road attendant object, a vehicle and the like, selects and specifies virtual models corresponding to the objects from the virtual model data base 103, and substitutes the corresponding virtual models for the objects.

Here, a positional coordinate, a speed, an acceleration, an angular velocity and others which are attribute data concerning the vehicle models are fixed when the vehicle models are specified. Moreover, when the actual vehicle moves, the corresponding vehicle model also moves, and a position of the actual vehicle is tracked.

In the virtual model reconstruction device 105, the objects such as a road, a road attendant object, a vehicle and others and the relationship between the objects are reconstructed into a plurality of corresponding virtual models and the relationship between these virtual models in the virtual space.

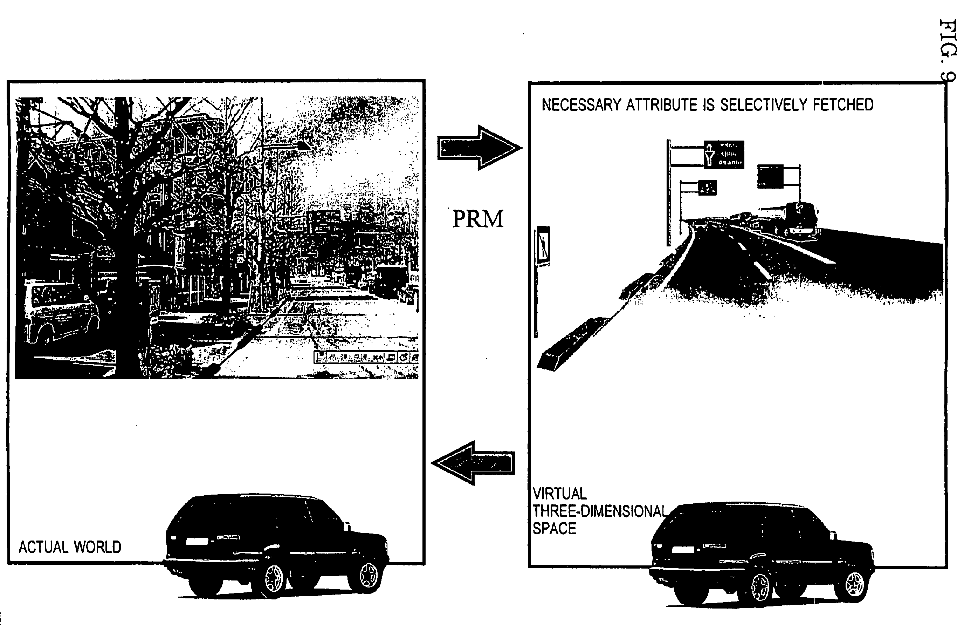

Here, all the objects do not have to be fetched into the virtual space from the physical world, selectively fetching objects required for traveling of the vehicle and their attribute data can suffice as shown in FIG. 9.

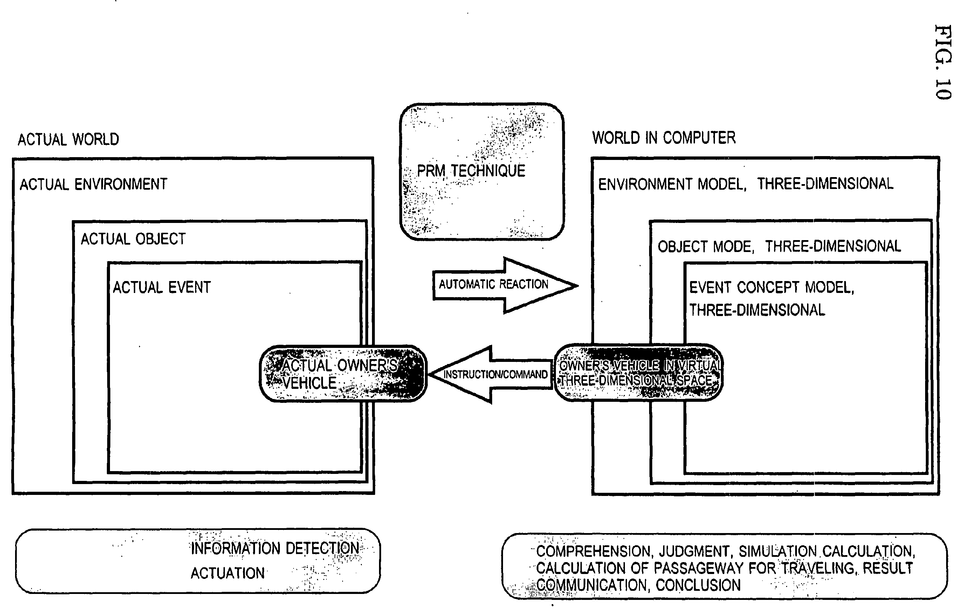

As shown in FIG. 10, objects, environments and events in the physical world are converted into and associated with the object models, environment models and event concept models in the virtual three-dimensional space.

Description will now be given as to calculation, processing and simulation in the virtual model processing device 106 and a process which leads to comprehension and judgment.

Here, the virtual model processing device 106 is constituted by an object attribute data model conversion device 106-1, a semantic data model conversion device 106-2, a comprehensive semantic data conversion device 106-3 and a judgment data model conversion device 106-4.

In the real world, as shown in FIG. 7, it is determined that the season is fall, the weather is clear and sunny, the time is 18 o'clock, the temperature is 18°C, and a vehicle is traveling toward the south along the national road 230 as environment, and there are a road, road marks, traffic signs, guard rails, electric poles, the owner's vehicle, an oncoming vehicle, and a following vehicle as objects, and the oncoming vehicle largely crosses over the center line as an event.

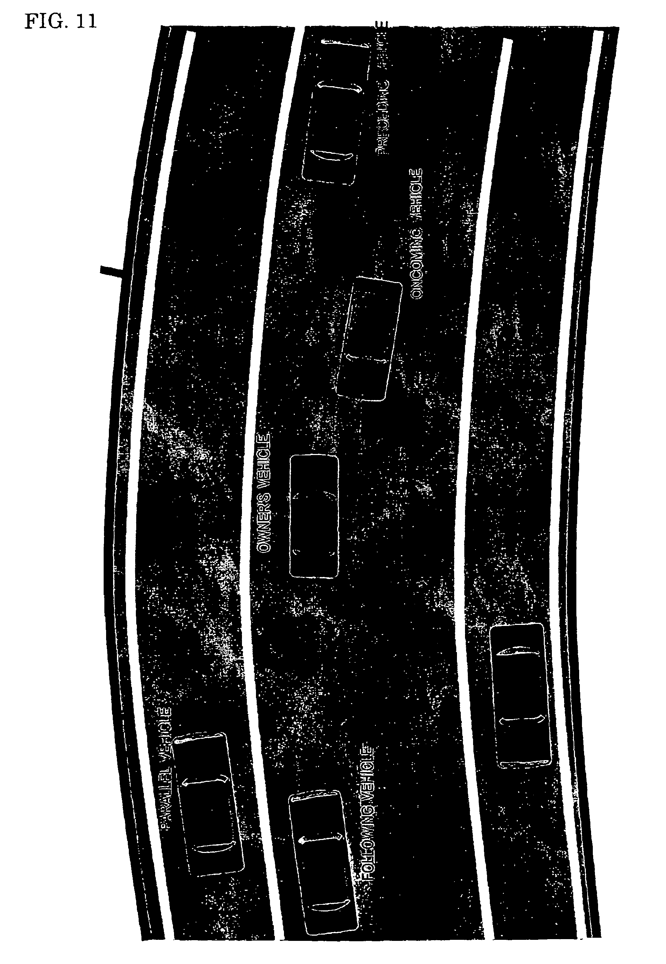

As shown in FIG. 11, indication contents "no passing", "straight ahead only"" and "speed limit 50 km/h" for the road marks and the traffic signs, three-dimensional shapes, positional coordinates and elastic coefficients of collision for guard rails, and three-dimensional shapes, positional coordinates and "55 km/h" for the owner's vehicle and the oncoming vehicle were selected and extracted as attribute data matched with a work object from attribute data concerning the reconstructed virtual models, and outputted as object attribute data models by the object attribute data model conversion device 106-1.

Subsequently, the semantic data model conversion device 106-2 generated a position and a direction of the owner's vehicle relative to the road, a position and a direction of the oncoming vehicle relative to the road, a position and a relative velocity of the owner's vehicle with respect to the oncoming vehicle, and a position and a direction of the owner's vehicle with respect to the guard rails as semantic data concerning the work object from the relationship of the outputted object attribute data, and outputted them as semantic data models.

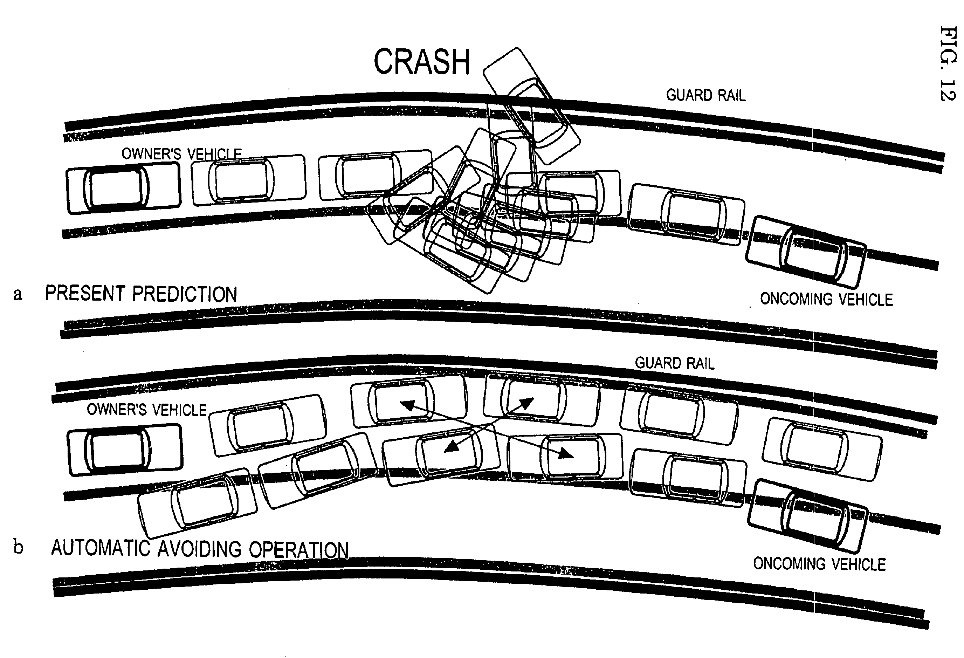

Then, as shown in FIG. 12a, the comprehensive semantic data model conversion device 106-3 executed the future prediction simulation and generated data "collision might occur since the oncoming vehicle is coming toward the hither side beyond the center line" and "collision avoiding action is required" as comprehensive semantic data concerning the work object from the relationship of the outputted semantic data, and these data were outputted as comprehensive semantic data models.

At last, the judgment data model conversion device 106-4 generated data "turn the steering wheel 30° in the counterclockwise direction on the stage 4" and "apply the brake and decelerate to 20 km/h on the stage 7" as judgment data optimum for the work object from the outputted comprehensive semantic data, and outputted them as judgment data models.

The control device 107 is actuated based on the judgment data and, as shown in FIG. 12b, the owner's vehicle is automatically operated and collision with the oncoming vehicle can be avoided in the real world.

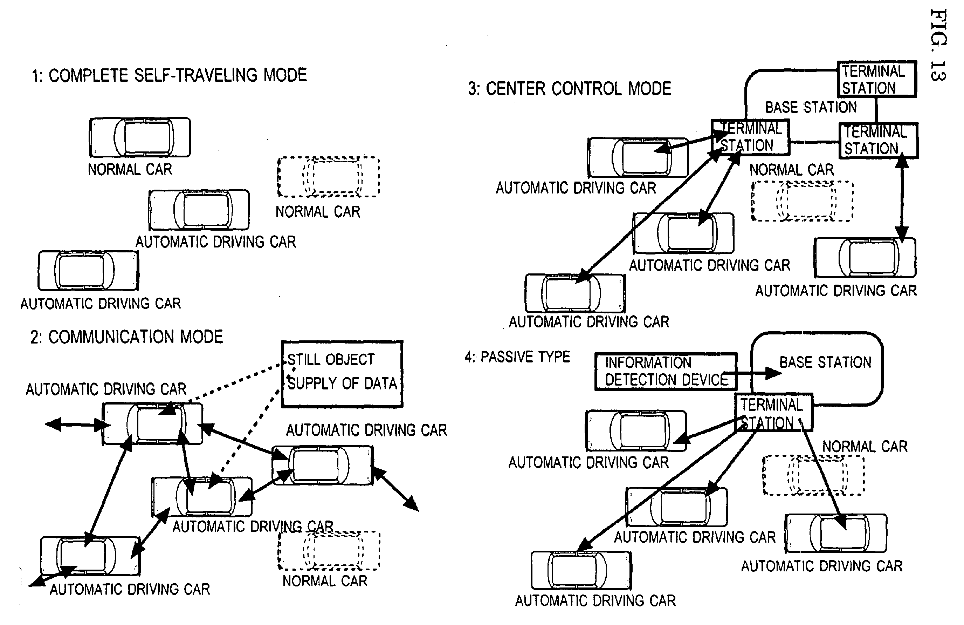

As shown in FIG. 13, as the modes of the automatic operating system 101 for vehicles, there can be assumed a complete self-traveling mode which assures data by a traveling vehicle solely, a mutual communication mode which transmits/receives data between a plurality of traveling vehicles, a base communication mode which transmits/receives data between a plurality of traveling vehicles and a base station, and others.

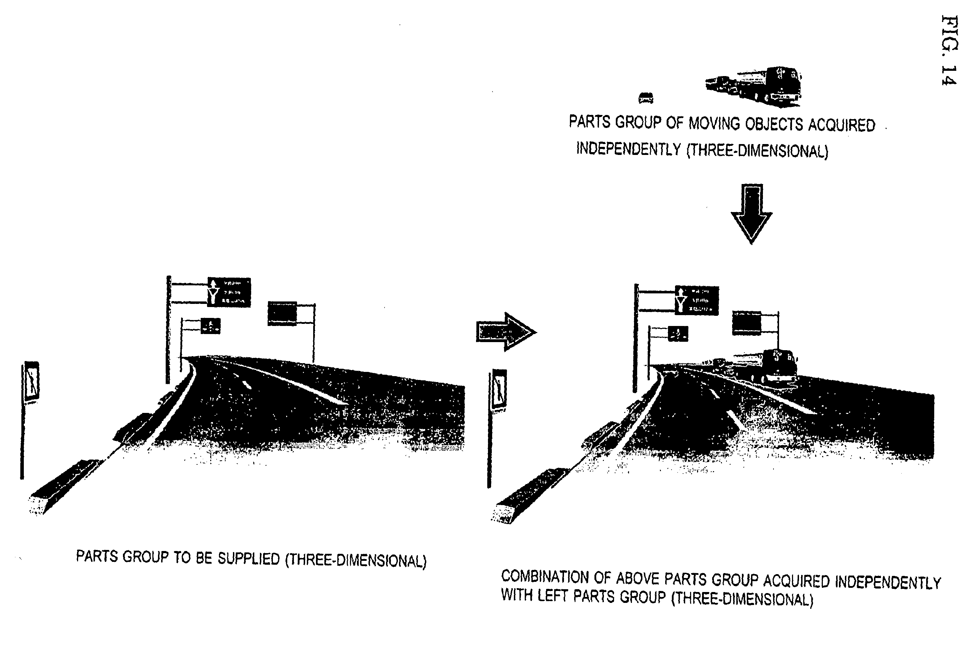

In case of the communication mode, information concerning still objects such as a road or a road attendant object which do not vary with time is supplied by receiving data from the base station and the like, and real time information acquired by other vehicles is also supplied by receiving data from other vehicles. Therefore, as shown in FIG. 14, acquiring only the real time information around the owner's vehicle can suffice.

### [Embodiment 2]

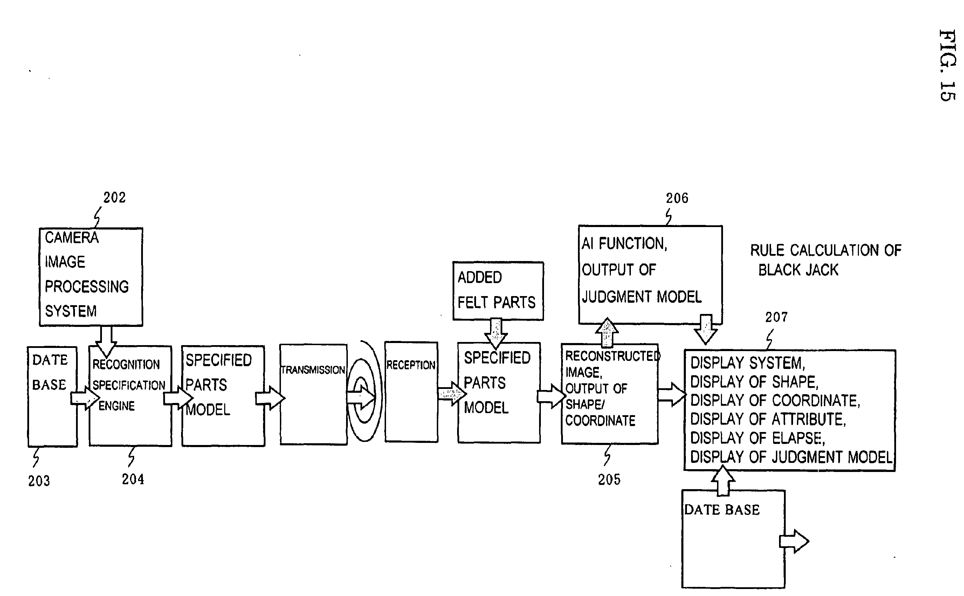

FIG. 15 is a conceptual view in a case that the intelligent operation system according to the present invention is applied to an automatic monitoring system for card games.

The automatic monitoring system 201 for card games is also basically constituted by an input device 202, a virtual model data base 203, a virtual model conversion device 204, a virtual model reconstruction device 205, a virtual model processing device 206, and a display device 207.

A video camera or the like can be adopted as the input device 202, and a situation in a predetermined range where a plurality of objects exist in the physical world can be acquired as a two-dimensional image or a pseudo-three-dimensional image by the video camera.

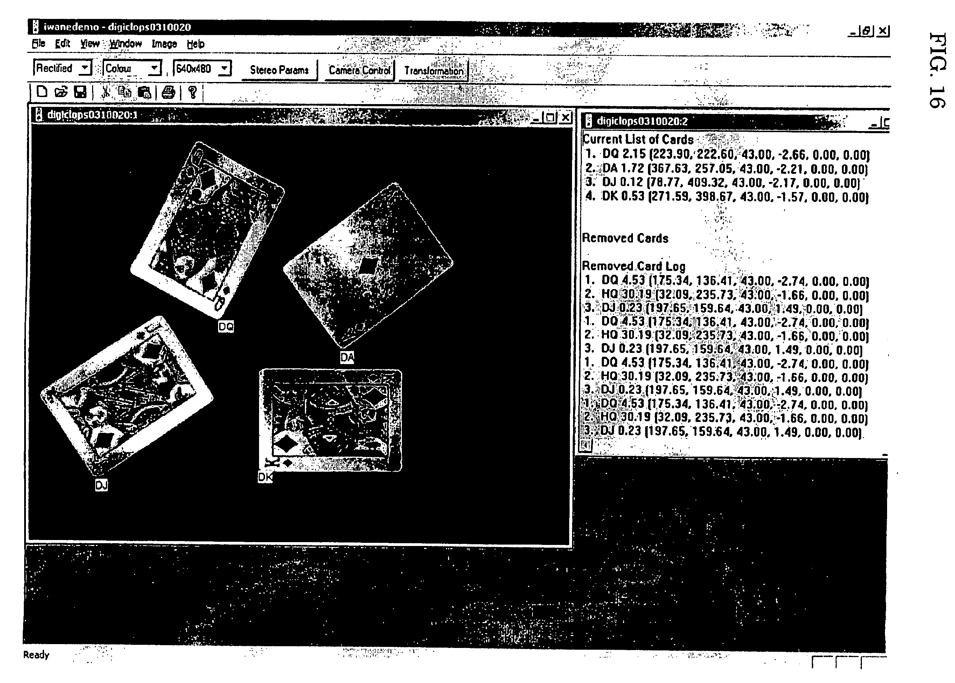

As shown in FIG. 16, models corresponding to objects such as cards or a table sheet are assumed as virtual models, and names, shapes, colors, positions and others are assumed as attribute data concerning the card models.

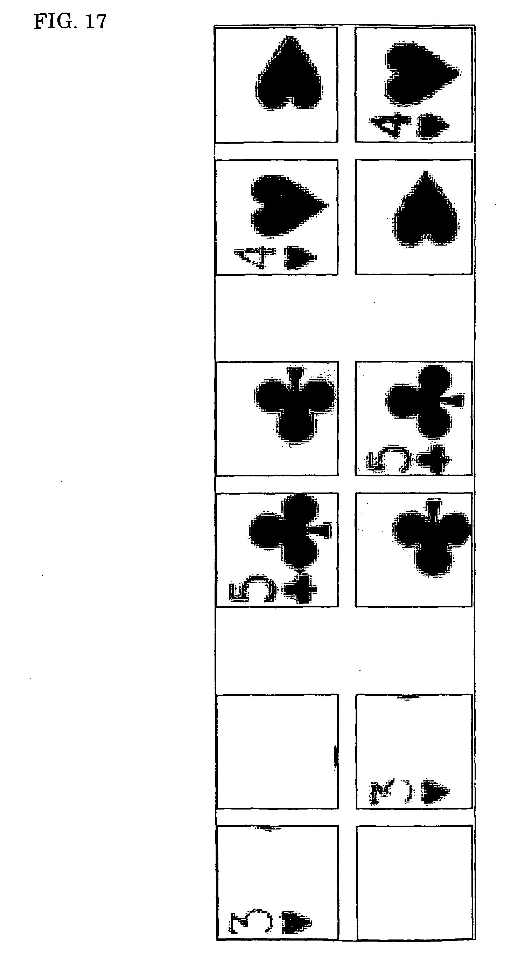

As shown in FIG. 17, the automatic monitoring system 201 adopts as the virtual models fragmentary models which are obtained by taking out appropriate parts in the cards as the objects and modeling them.

The virtual model conversion device 204 recognizes information concerning objects such as the cards or the table sheet acquired by the video camera, selects and specifies virtual models corresponding to these objects from the virtual model data base 203, and substitutes the corresponding models for the objects.

Here, the positional coordinate which is the attribute data concerning the card model is fixed when the card model is specified. Further, when the actual card moves, the corresponding card model also moves and a position of the actual card is tracked.

The virtual model reconstruction device 205 reconstructs the objects such as the cards or the table sheet and the relationship between these objects into a plurality of corresponding virtual models and the relationship between these virtual models in the virtual space.

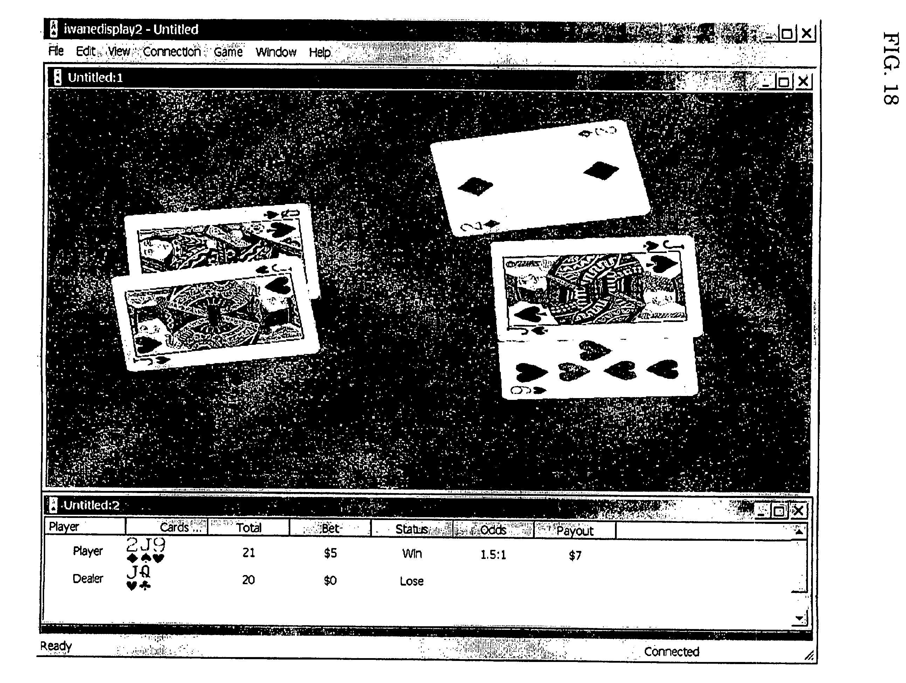

By the above-described processing, as shown in FIG. 18, the objects and the events in the actual world are converted into and associated with object models and event concept models in the virtual three-dimensional space.

Description will now be given as to calculation, processing and simulation in the virtual model processing device 206 and a process leading to comprehension and judgment.

Here, the virtual model processing device 206 is constituted by an object attribute data model conversion device 206-1, a semantic data model conversion device 206-2, a comprehensive semantic data conversion device 206-3 and a judgment data model conversion device 206-4.

In the actual world, as shown in FIG. 18, there were cards and a table sheet as objects, and "Q of spades", "J of hearts" were dealt to a dealer while "9 of hearts", J of spades" and "2 of diamonds" were dealt to a player as an event.

First, the object attribute data model conversion device 206-1 selected and extracted names, numeric values and positions for cards as attribute data matched with a work object from the attribute data concerning the reconstructed virtual models, and outputted them as object attribute data models.

Then, the semantic data model conversion device 206-2 generated distances between cards as semantic data concerning the work object from the relationship between the outputted object attribute data, and outputted them as semantic data models.

Subsequently, as shown in FIG. 18, the comprehensive semantic data model conversion device 206-3 executed rule calculation of the game "Black Jack" and generated data "a sum total of numeric values of the cards on the dealer's side is 20 and a sum total of numeric values of the cards on the player's side is 21" as comprehensive semantic data concerning the work object based on the relationship of the outputted semantic data, and the generated data were outputted as comprehensive semantic data models.

At last, the judgment data model conversion device 206-4 generated data "the dealer is a winner" and "the player is loser" as judgment data optimum for the work object from the outputted comprehensive semantic data, and outputted the generated data as judgment data models.

Based on the judgment data, in the physical world, as shown in FIG. 18, names of the cards dealt to the dealer and the player, totals of numeric values, victory and defeat are displayed based on the judgment data in the actual world, thereby monitoring the card game.

It is to be noted that the automatic monitoring system 201 for card games is constituted by a server device and a client device, and configured to transmit/receive data between the server device and the client device.

### Industrial Applicability

As described above, according to the intelligent operation system of the present invention, a transport machine itself such as an automobile or an aircraft and an operating machine itself such as a transporter crane or a robot can execute work operations, namely, comprehending and judging various situations and then operating the machine based on such comprehension and judgment like humans do, thereby realizing the substantially complete automatic operating system.

Furthermore, according to the intelligent operation system of the present invention, an apparatus which keeps occupied by a human and an apparatus which substitutes for a human can execute work operations, i.e., recognizing a process and a result based on comprehension and judgment, thereby realizing the intelligent operation system which plays games and uses sign languages with humans, the automatic monitoring system which performs monitoring, observation and the like on behalf of humans, and others.

## Claims

1. An intelligent operation system (11, 51) comprising:
an input device (12, 102, 202) which acquires information concerning a plurality of objects in the actual world;
a virtual model conversion device (14, 104, 204) which recognizes said information concerning a plurality of the objects in the actual world acquired by the input device,
a virtual model reconstruction device (15, 105, 205) which reconstructs a plurality of the objects of the actual world and a relationship between these objects in the actual world into a plurality of corresponding virtual models and a relationship between these virtual models in the virtual space;
a virtual model processing device (16, 106, 206) which performs calculation and processing based on the plurality of the virtual models and the relationship between these virtual models reconstructed by the virtual model reconstruction device, and comprehends and judges the plurality of the virtual models and the relationship between them; **characterized in that**
the intelligent operation system further comprises a virtual model data base (13, 103, 203) which registers and stores therein the plurality of virtual models in a virtual space which are each given attribute data corresponding to the plurality of objects in the actual world;
the virtual model conversion device (14, 104, 204) selects attribute data matched with an object from the virtual model data base and specifies virtual models corresponding to the plu-rality of the objects, and substitutes the plurality of the virtual models for the plurality of the corresponding objects in the actual world;
a control device (17, 107) which automatically operates a predetermined object in the actual world based on comprehension and judgment made by the virtual model processing device.

2. The intelligent operation system according to claim 1, **characterized in that** a display device (57, 207) which automatically displays a process and a result in the actual world based on comprehension and judgment made by the virtual model processing device (16, 106, 206) is determined as a constituted element in place of the control device.

3. The intelligent operation system according to claim 1 or claim 2, **characterized in that** the virtual model processing device (16, 106, 206) is constituted by:
an object attribute data model conversion device (16-1, 106-1, 206-1) which selects and extracts attribute data matched with a work object from attribute data concerning a plurality of the reconstructed virtual models, and converts them into object attribute data models;
a semantic data model conversion device (16-2, 106-2, 206-2) which generates semantic data concerning the work object from the relationship of the extracted object attribute data models, and converts them into semantic data models;
a comprehensive semantic data conversion device (16-3, 106-3, 206-3) which generates comprehensive semantic data concerning the work object from the relationship of the generated semantic data models, and converts them into comprehensive semantic data models; and
a judgment data model conversion device (16-4, 106-4, 206-4) which generates judgment data optimum for the work object from the generated comprehensive semantic data models, converts the generated judgment data into judgment data models, and outputs them.

4. The intelligent operation system according to claims 1 to 3, **characterized in that** the virtual model includes a fragmentary model obtained by dividing an object into a plurality of constituent elements and modeling each of the constituent elements.

5. The intelligent operation system according to claims 1 to 4, **characterized in that** the attribute data includes a physical quantity, a sound, an odor and others.

6. The intelligent operation system according to claims 1 to 5, **characterized in that** the virtual model conversion device recognizes and tracks a moving or varying object before specifying a virtual model corresponding to that object, grasps a part in the virtual model which can be readily specified while the object is moving or varying with time, and specifies the virtual model corresponding to the object.

7. The intelligent operation system according to claims 1 to 6, **characterized in that** the semantic data model conversion device (16-2, 106-2, 206-2) is constituted on a plurality of stages in the virtual model processing device (16, 106, 206).

8. The intelligent operation system according to claims 1 to 7, **characterized in that** the intelligent operation system (11, 51) has a data transmission/reception device which can transmit/receive data in the intelligent operation system or between the intelligent operation systems.

## Patentansprüche

1. Intelligentes Betriebssystem (11, 51), umfassend:
- eine Eingabe-Vorrichtung (12, 102, 202), welche Information bezüglich einer Vielzahl von Objekten in der tatsächlichen Welt erwirbt;
- eine Wandlungs-Vorrichtung (14, 104, 204) für ein virtuelles Modell, welche die besagte Information betreffend einer Vielzahl der Objekte in der tatsächlichen Welt, erworben durch die Eingabe-Vorrichtung, erkennt;
- eine Rekonstruktions-Vorrichtung (15, 105, 205) für ein virtuelles Modell, welche eine Vielzahl der Objekte der tatsächlichen Welt rekonstruiert und eine Beziehung zwischen diesen Objekten in der tatsächlichen Welt und einer Vielzahl von entsprechenden virtuellen Modellen und eine Beziehung zwischen diesen virtuellen Modellen im virtuellen Raum erzeugt;
- eine Verarbeitungs-Vorrichtung (16, 106, 206) für ein virtuelles Modell, welche die Berechnung und die Verarbeitung, basierend auf der Vielzahl der virtuellen Modelle und der Beziehung zwischen diesen virtuellen Modellen durchführt, die durch die Rekonstruktions-Vorrichtung des virtuellen Modells rekonstruiert werden, und welche die Vielzahl der virtuellen Modelle und die Beziehung zwischen ihnen aufnimmt und bewertet;
**dadurch gekennzeichnet, dass** das intelligente Betriebssystem weiterhin umfasst:
- eine Datenbank (13, 103, 203) für ein virtuelles Modell, welche die Vielzahl von virtuellen Modellen in einem virtuellen Raum registriert und speichert, denen jeweils als Attributdaten entsprechend der Vielzahl von Objekten in der tatsächlichen Welt gegeben werden;
- dass die Wandlungs-Vorrichtung (14, 104, 204) für das virtuelle Modell Attributdaten auswählt, die mit einem Objekt aus der Datenbank des virtuellen Modells übereinstimmen und virtuelle Modelle spezifiziert, die der Vielzahl der Objekte entsprechen, und die Vielzahl der virtuellen Modelle für die Vielzahl der entsprechenden Objekte in der tatsächlichen Welt substituiert;
- eine Steuer-Vorrichtung (17, 107), die automatisch ein vorbestimmtes Objekt in der tatsächlichen Welt basierend auf dem Verständnis und der Bewertung betätigt, welches von der Verarbeitungs-Vorrichtung des virtuellen Modells durchgeführt worden ist.

2. Intelligentes Betriebssystem nach Anspruch 1, **dadurch gekennzeichnet, dass** eine Anzeige-Vorrichtung (57, 207), die automatisch einen Prozess und ein Ergebnis in der tatsächlichen Welt darstellt, basierend auf dem Verständnis und der Bewertung durch die Verarbeitungs-Vorrichtung (16, 106, 206) für das virtuelle Modell, als ein konstituierendes Element anstelle der Steuervorrichtung bestimmt wird.

3. Intelligentes Betriebssystem nach Anspruch 1 oder Anspruch 2, **dadurch gekennzeichnet, dass** die Verarbeitungs-Vorrichtung (16, 106, 206) für das virtuelle Modell ausgebildet ist aus:
- einer, Objekt-Attributdaten des Modells betreffende Wandlungs-Vorrichtung (16-1, 106-1, 206-1), welche Attributdaten auswählt und selektiert, die mit einem Arbeitsobjekt aus den Attributdaten betreffend eine Vielzahl von rekonstruierten virtuellen Modellen übereinstimmt und diese in Objekt-Attributdaten-Modelle wandelt;
- eine Wandlungs-Vorrichtung (16-2, 106-2, 206-2) für ein semantisches Datenmodell, welche semantische Daten betreffend das Arbeitsobjekt aus der Beziehung der extrahierten Objekt-Attributdaten-Modelle erzeugt und diese in semantische Datenmodelle wandelt;
- eine Wandlungs-Vorrichtung (16-3, 106-3, 206-3) für das Verständnis der semantischen Daten, welche verständliche semantische Daten betreffend das Arbeitsobjekt aus der Beziehung der extrahierten semantischen Datenmodelle erzeugt und diese in verständliche semantische Datenmodelle wandelt; und
- eine Wandlungs-Vorrichtung (16-4, 106-4, 206-4) für eine Bewertung des Datenmodells, welche Bewertungs-Daten optimal für das Arbeitsobjekt aus den erzeugten verständlichen semantischen Datenmodellen erzeugt, wobei die allgemeinen Bewertungen in Bewertungs-Datenmodelle gewandelt werden und diese ausgegeben werden.

4. Intelligentes Betriebssystem nach einem der Ansprüche 1 bis 3, **dadurch gekennzeichnet, dass** das virtuelle Modell ein fragmentäres Modell umfasst, das durch Teilung eines Objektes in eine Vielzahl von dieses darstellende Elemente und das Modellieren von jedem der es ausbildenden Elemente erhalten wird.

5. Intelligentes Betriebssystem nach einem der Ansprüche 1 bis 4, **dadurch gekennzeichnet, dass** die Attributdaten eine körperliche Grösse, ein Geräusch, einen Geruch und andere Attribute enthält.

6. Intelligentes Betriebssystem nach einem der Ansprüche 1 bis 5, **dadurch gekennzeichnet, dass** die Wandlungs-Vorrichtung für das virtuelle Modell ein sich bewegendes oder sich veränderndes Objekt erkennt und verfolgt, bevor ein virtuelles Modell bestimmt wird, welches diesem Objekt entspricht, einen Teil in dem virtuellen Modell ergreift, welches in einfacher Weise spezifiziert werden kann, während sich das Objekt mit der Zeit bewegt oder verändert und das virtuelle Modell entsprechend dem Objekt spezifiziert.

7. Intelligentes Betriebssystem nach einem der Ansprüche 1 bis 6, **dadurch gekennzeichnet, dass** die Wandlungs-Vorrichtung (16-2, 106-2, 206-2) für das semantische Datenmodell aus einer Vielzahl von Stufen in der Verarbeitungs-Vorrichtung (16, 106, 206) des virtuellen Modells ausgebildet ist.

8. Intelligentes Betriebssystem nach einem der Ansprüche 1 bis 7, **dadurch gekennzeichnet, dass** das intelligente Betriebssystem (11, 51) eine Datenübertragungs-/Empfangs-Vorrichtung aufweist, die Daten an das intelligente Betriebssystem oder zwischen intelligenten Betriebssystemen übertragen/empfangen kann.

## Revendications

1. Système d'exploitation (11, 51) intelligent, comprenant
- un dispositif (12, 102, 202) d'entrée, lequel acquiert de l'information sur une pluralité d'objets dans le monde réel;
- un dispositif (14, 104, 204) de conversion de modèle virtuel, qui reconnaît ladite information concernant une pluralité d'objets dans le monde réel, acquis par le dispositif d'entrée;
- un dispositif (15, 105, 205) de reconstruction de modèle virtuel qui reconstruit une pluralité d'objets du monde réel et une relation entre ces objets dans le monde réel dans une pluralité de modèles virtuels correspondants, et une relation entre ces modèles virtuels dans l'espace virtuel;
- un dispositif (16, 106, 206) de traitement de modèle virtuel qui exécute un calcul et un traitement basé sur la pluralité de modèles virtuels et la relation entre ces modèles virtuels qui sont reconstruit par le dispositif de reconstruction de modèle virtuel et qui enregistre et juge la pluralité de modèles virtuels et la relation entre eux;
**caractérisé en ce que**:
- le système d'exploitation intelligent comprend aussi une base de données (13, 103, 203) de modèle virtuel qui enregistre et mémorise en elle la pluralité de modèles virtuels dans un espace virtuel, auxquels sont donnés des données d'attribut correspondants à la pluralité d'objets dans le monde réel;
- **en ce que** le dispositif (14, 104, 204) de conversion de modèle virtuel choisit des données d'attribut qui conviennent à un objet de la base de données de modèles virtuels et qui spécifie des modèles virtuels correspondants à la pluralité des objets et qui substituent la pluralité de modèles virtuels pour la pluralité d'objets correspondants dans le monde réel;
- un dispositif (17, 107) de contrôle qui automatiquement actionne un objet prédéterminé dans le monde réel, basé sur la compréhension et le jugement fait par le dispositif de traitement de modèle virtuel.

2. Système d'exploitation intelligent selon la revendication 1, **caractérisé en ce que** un dispositif (57, 207) d'affichage qui automatiquement affiche une procédure et un résultat dans le monde réel, basé sur la compréhension et le jugement fait par le dispositif (16, 106, 206) de traitement de modèle virtuel, est déterminé en tant qu'élément constituant à la place du dispositif de contrôle.

3. Système d'exploitation intelligent selon la revendication 1 ou la revendication 2, **caractérisé en ce que** le dispositif (16, 106, 206) de traitement de modèle virtuel est constitué par:
- un dispositif (16-1, 106-1, 206-1) de conversion de modèle de données d'attribut d'objet, qui sélectionne et extrait des données d'attribut, coordonnées avec un objet de données d'attribut, concernant une pluralité de modèles virtuels reconstruits, et qui les convertit dans des modèles de données d'attribut d'objet;
- un dispositif (16-2, 106-2, 206-2) de conversion de modèle de données sémantiques qui génère des données sémantiques concernant l'objet de travail de la relation des modèles de données d'attribut d'objet extraits, et qui les convertit dans des modèles de données sémantiques;
- un dispositif (16-3, 106-3, 206-3) de conversion de données sémantiques compréhensives qui génère des données sémantiques compréhensives concernant l'objet de travail de la relation des modèles de données sémantiques générés et qui les convertit dans des modèles de données sémantiques compréhensives; et
- un dispositif (16-4, 106-4, 206-4) de conversion de modèle de données de jugement qui génère des données de jugement optimales pour l'objet de travail des modèles de données sémantiques compréhensives générés et qui les convertit dans les données de jugement générées dans des modèles de données de jugement et les distribue.

4. Système d'exploitation intelligent selon l'une des revendications 1 à 3, **caractérisé en ce que** le modèle virtuel comprend un modèle fragmentaire obtenu par division d'un objet dans une pluralité d'éléments constituants et en modulant chacun de ces éléments constituants.

5. Système d'exploitation intelligent selon l'une des revendications 1 à 4, **caractérisé en ce que** les données d'attribut comprennent une quantité physique, un bruit, une odeur ou d'autres données.

6. Système d'exploitation intelligent selon l'une des revendications 1 à 5, **caractérisé en ce que** le dispositif de conversion de modèle virtuel reconnaît et poursuit un objet qui se déplace ou qui change avant de spécifier un modèle virtuel correspondant à cet objet, prend une partie du modèle virtuel qui peut être facilement spécifiée, alors que l'objet se déplace ou change dans le temps, et qui spécifie un modèle virtuel, correspondant à l'objet.

7. Système d'exploitation intelligent selon l'une des revendications 1 à 6, **caractérisé en ce que** le dispositif de conversion (16-2, 106-2, 206-2) de modèle de données sémantiques est constitué par une pluralité d'étapes dans le dispositif (16, 106, 206) de traitement de modèle virtuel.

8. Système d'exploitation intelligent selon l'une des revendications 1 à 7, **caractérisé en ce que** le système d'exploitation intelligent (11, 51) possède un dispositif de transmission/réception de données qui transmet/reçoit des données dans le système d'exploitation intelligent ou entre des systèmes d'exploitation intelligents.
